# EUROPÄISCHE PATENTANMELDUNG

(11) **EP 1 974 982 A2**
(43) Veröffentlichungstag der Anmeldung: **01.10.2008**
(21) Anmeldenummer: 08001763.5
(22) Anmeldetag: 31.01.2008
(51) Int. Cl.: B60N 2/04, B64D 11/06, A47C 1/022

(54) **Sitzvorrichtung, insbesondere Fahrzeug-oder Flugzeugsitzvorrichtung**

(30) Priorität: 27.03.2007 DE 102007014524
(71) Anmelder: Recaro Aircraft Seating GmbH & Co. KG, 74523 Schwäbisch Hall (DE)
(72) Erfinder: Speh, Andreas, 88444 Ummendorf (DE); Baumann, Jürgen, 78351 Ludwigshafen (DE)
(74) Vertreter: Daub, Thomas

(57) **Zusammenfassung**

Die Erfindung geht aus von einer Sitzvorrichtung, insbesondere einer Fahrzeug- oder Flugzeugsitzvorrichtung, mit einer Sitzbodenlagereinrichtung (10), die dazu vorgesehen ist, einen Sitzboden (12) beweglich zu lagern.

Es wird vorgeschlagen, dass die Sitzbodenlagereinrichtung (10) wenigstens eine erste Lagereinheit (14) mit zumindest einem Hebelgetriebe (16) und wenigstens eine zweite Lagereinheit (18) mit zumindest einer Kulisse (20) aufweist.

## Beschreibung

### Stand der Technik

Die Erfindung geht aus von einer Sitzvorrichtung nach dem Oberbegriff des Anspruchs 1.

Aus der EP 1 116 654 B1 ist eine gattungsbildende Sitzvorrichtung mit einer Sitzbodenlagereinrichtung bekannt, die dazu vorgesehen ist, einen Sitzboden beweglich zu lagern.

### Vorteile der Erfindung

Die Erfindung geht aus von einer Sitzvorrichtung, insbesondere einer Fahrzeug- oder Flugzeugsitzvorrichtung, mit einer Sitzbodenlagereinrichtung, die dazu vorgesehen ist, einen Sitzboden beweglich zu lagern. Unter einer "beweglichen Lagerung" des Sitzbodens soll insbesondere verstanden werden, dass der Sitzboden bei einer Bewegung der Sitzbodenlagereinrichtung zumindest eine Bewegung relativ zu mindestens einer Lagereinheit der Sitzbodenlagereinrichtung ausführt. Ferner soll unter "vorgesehen" insbesondere speziell ausgestattet und/oder ausgelegt verstanden werden.

Es wird vorgeschlagen, dass die Sitzbodenlagereinrichtung wenigstens eine erste Lagereinheit mit zumindest einem Hebelgetriebe und wenigstens eine zweite Lagereinheit mit zumindest einer Kulisse aufweist. Durch eine entsprechende Ausgestaltung können Gewicht, Bauteile, Kosten und/oder Montageaufwand der Sitzvorrichtung eingespart werden, indem die Sitzbodenlagereinrichtung sowohl eine Vorwärtsbewegung des Sitzbodens als auch eine Neigung des Sitzbodens ermöglicht. Hierdurch ist kosten- und bauraumsparend die Vorwärtsbewegung des Sitzbodens und die Sitzwinkeleinstellung in einer Baugruppe vereint. Es ist ein großer Verfahrweg des Sitzbodens und zusätzlich eine Neigungseinstellung der Sitzfläche möglich.

Es wird vorgeschlagen, dass die erste, das Hebelgetriebe aufweisende Lagereinheit in einem vorderen Bereich der Sitzvorrichtung und die zweite, die Kulisse aufweisende Lagereinheit in einem hinteren Bereich der Sitzvorrichtung angeordnet ist. Hierdurch wird der vordere Teil des Sitzes über das Hebelgetriebe nach vorne bewegt, wobei das Hebelgetriebe zusätzlich die Sitzwinkeleinstellung, d.h. die Neigung des Sitzbodens übernimmt. Der hintere Teil des Sitzes wird über die Kulisse nach vorne bewegt.

Die Sitzvorrichtung kann besonders kostensparend ausgebildet werden, wenn das Hebelgetriebe zumindest einen Hebel aufweist, welcher längenverstellbar ist.

Vorteilhafterweise kann eine besonders fließende Bewegung des Sitzbodens erreicht werden, wenn das Hebelgetriebe mindestens zwei gelenkig miteinander verbundene Hebel aufweist, da der Sitzboden damit eine kombinierte Bewegung ausführt, und zwar eine translatorische und eine rotatorische Bewegung.

Vorzugsweise können die Hebel unterschiedliche und/oder gleiche Längen aufweisen, wodurch der Verstellweg des Sitzbodens unterschiedlich eingestellt werden kann.

Ferner wird vorgeschlagen, dass die Kulisse einen geradlinigen und/oder einen kurvenförmigen Verlauf aufweist. Hierdurch kann der Kulissenverlauf den unterschiedlichsten Bedingungen hinsichtlich des Einbauraums, der Montage, der Benutzerfreundlichkeit usw. Rechnung tragen.

Vorteilhafterweise weist die Kulisse einen U-förmigen Querschnitt auf, wodurch eine kostengünstige und einfache Herstellung des Bauteils möglich ist. Des Weiteren ermöglicht die einfache Geometrie eine sichere Führung eines Führungselementes der zweiten Lagereinheit.

In einer weiteren Ausgestaltung der Erfindung ist eine Stellvorrichtung vorgesehen, die zum Antrieb der Sitzbodenlagereinrichtung dient. Dies ermöglicht eine einfache, bequeme Einstellung der Sitzvorrichtung.

Vorzugsweise ist die Stellvorrichtung am Hebelgetriebe vorgesehen. Insbesondere steht die Stellvorrichtung mit mindestens einem Hebel derart in Wirkverbindung, dass die Stellvorrichtung in einer Start-, Lande- und Rollstellung (TTL-Position) der Sitzvorrichtung kaum belastet wird, da das Hebelgetriebe die beim Starten, Landen und Rollen des Flugzeugs eventuell vorkommenden Crashlasten im Wesentlichen direkt in die Sitzvorrichtung einleitet.

Vorteilhafterweise dient die Stellvorrichtung zusätzlich zur Dämpfung der Stellbewegung der Sitzvorrichtung, wodurch ein separates Bauteil zur Dämpfung entfallen kann.

Die erfindungsgemäße Sitzvorrichtung eignet sich aufgrund der möglichen Gewichtsreduzierung insbesondere für einen Flugzeugsitz. Grundsätzlich ist eine entsprechende Sitzvorrichtung jedoch auch bei anderen, dem Fachmann als geeignet erscheinenden Sitzen einsetzbar, wie insbesondere bei Kraftfahrzeugsitzen, Sitzen für Hörsäle usw.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen schematisch dargestellten Flugzeugsitz in einer Seitenansicht mit einer erfindungsgemäßen Sitzvorrichtung in einer ersten Stellung und
- Fig. 2: den Flugzeugsitz gemäß Fig. 1 in der Seitenansicht in einer zweiten Stellung.

### Beschreibung des Ausführungsbeispiels

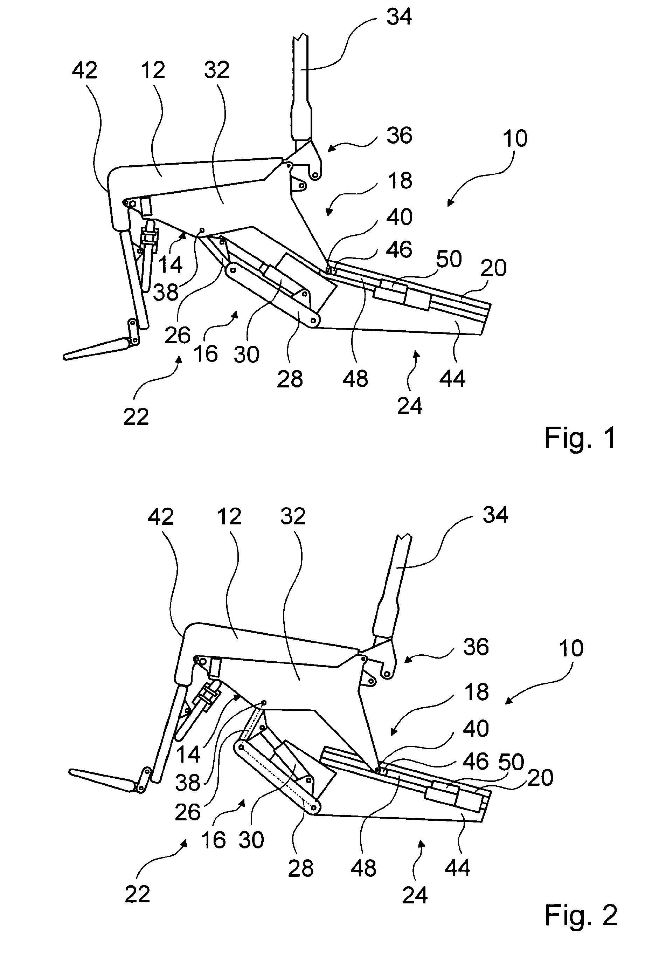

Figur 1 zeigt einen schematisch dargestellten Flugzeugsitz in einer Seitenansicht mit einer Sitzvorrichtung, die eine Sitzbodenlagereinrichtung 10 umfasst, die dazu vorgesehen ist, einen Sitzboden 12 des Flugzeugsitzes beweglich zu lagern. Der Sitzboden 12 ist über ein Trägerelement 32 mit der Sitzbodenlagereinrichtung 10 gekoppelt, welche dazu vorgesehen ist, auf einem Kabinenboden eines Flugzeugs befestigt zu werden. Das Trägerelement 32 ist als separates Bauteil ausgebildet und fest mit dem Sitzboden 12 verbunden. Alternativ hierzu kann das Trägerelement 32 auch einstückig mit dem Sitzboden 12 ausgebildet sein.

Ferner umfasst die Sitzvorrichtung eine Rückenlehneneinheit 34 und eine nur teilweise dargestellte Rückenlehnenkinematikeinheit 36, über welche die Rückenlehneneinheit 34 mit dem Trägerelement 32 und/oder der Sitzbodenlagereinrichtung 10 gekoppelt ist.

Die Sitzbodenlagereinrichtung 10 umfasst eine erste Lagereinheit 14 mit mindestens einer ersten Lagerstelle 38 und eine zweite Lagereinheit 18 mit mindestens einer zweiten Lagerstelle 40. Die Lagereinheiten 14, 18 sind über die Lagerstellen 38, 40 mit dem Trägerelement 32 und somit mit dem Sitzboden 12 gekoppelt. Im vorliegenden Ausführungsbeispiel sind zwei Lagerstellen 38, 40 vorgesehen. Es können jedoch auch weitere, insbesondere in Querrichtung des Sitzbodens 12 voneinander beabstandete Lagerstellen an der Sitzbodenlagereinrichtung 10 vorgesehen sein. Dabei soll unter "Querrichtung des Sitzbodens" insbesondere eine Richtung verstanden werden, die zumindest eine Komponente parallel zu einer Sitzbodenvorderkante 42 aufweist.

Erfindungsgemäß umfasst die erste Lagereinheit 14 ein Hebelgetriebe 16, wobei die erste Lagerstelle 38 der Sitzbodenlagereinrichtung 10 mit dem Hebelgetriebe 16 verbunden ist, welches wiederum über ein Fußelement 44 mit dem Kabinenboden des Flugzeugs verbunden ist. Im vorliegenden Ausführungsbeispiel weist das Hebelgetriebe 16 zwei gelenkig miteinander verbundene Hebel 26, 28 auf. Es sind jedoch auch weitere, dem Fachmann als sinnvoll erscheinende Ausführungen von Hebelgetrieben möglich, wie beispielsweise ein Hebelgetriebe mit einem Hebel, dessen Länge verstellbar ist. Die beiden Hebel 26, 28 weisen vorzugsweise unterschiedliche Längen auf, wobei auch Hebel mit gleichen Längen möglich wären. Der kürzere Hebel 26 ist mit der ersten Lagerstelle 38 und der längere Hebel 28 ist über das Fußelement 44 mit dem Kabinenboden des Flugzeugs verbunden.

Erfindungsgemäß umfasst die zweite Lagereinheit 18 eine Kulisse 20. Die zweite Lagerstelle 40 der Sitzbodenlagereinrichtung 10 weist zur Führung in der Kulisse 20 ein Führungselement 46, vorzugsweise in Form eines Klotzes auf, wobei die Kulisse 20 über das Fußelement 44 mit dem Kabinenboden des Flugzeugs in Verbindung steht. Im vorliegenden Ausführungsbeispiel weist die nach hinten abgesenkte Kulisse 20 einen geradlinigen Verlauf auf, wobei jedoch auch jeder weitere, einem Fachmann als sinnvoll erscheinende Verlauf der Kulisse 20 möglich ist, wie beispielsweise ein kurvenförmiger Verlauf oder eine Kombination von geradlinigem und kurvenförmigem Verlauf. Vorzugsweise weist die Kulisse 20 einen U-förmigen Querschnitt auf. Die am Fußelement 44 befestigte Kulisse 20 erstreckt sich seitlich neben der zweiten Lagerstelle 40 derart, dass eine Öffnung 48 des U-Querschnitts der Kulisse 20 der zweiten Lagerstelle 40 zugewandt ist.

Vorteilhafterweise ist die erste Lagereinheit 14 in einem vorderen Bereich 22, d.h. in einem der Sitzbodenvorderkante 42 zugewandten Bereich der Sitzvorrichtung und die zweite Lagereinheit 18 in einem hinteren Bereich 24, d.h. in einem der Rückenlehneneinheit 34 zugewandten Bereich der Sitzvorrichtung angeordnet.

Ferner weist die Sitzvorrichtung eine Stellvorrichtung 30 auf, die zum Antrieb der Sitzbodenlagereinrichtung 10 dient. Die Stellvorrichtung 30 ist am Hebelgetriebe 16 vorgesehen. Im vorliegenden Ausführungsbeispiel steht die Stellvorrichtung 30 mit beiden Hebeln 26, 28 in Wirkverbindung, indem sie mit beiden Hebeln 26, 28 verbunden ist. Es sind jedoch auch andere, dem Fachmann als sinnvoll erscheinende Anordnungen der Stellvorrichtung 30 an der Sitzbodenlagereinrichtung 10 vorstellbar, beispielsweise die Anordnung der Stellvorrichtung 30 zwischen Trägerelement 32 und Fußelement 44. Zusätzlich kann die Stellvorrichtung 30 zur Dämpfung der Stellbewegung der Sitzvorrichtung dienen.

Fig. 1 zeigt den Flugzeugsitz mit der Rückenlehneneinheit 34 in einer im Wesentlichen aufrechten Stellung, wie sie beispielsweise der Start-, Lande- und Rollstellung (TTL-Stellung) entspricht. Hierbei befindet sich der Sitzboden 12 in seiner vordersten Position, wobei sich die zweite Lagerstelle 40 der zweiten Lagereinheit 18 vorne in der Kulisse 20 befindet, und der kurze Hebel 26 des Hebelgetriebes 16 nach vorne verschwenkt ist. Fig. 2 zeigt den Flugzeugsitz mit der Rückenlehneneinheit 34 in einer nach hinten geneigten Stellung, also in der sogenannten Reisestellung. Hierbei befindet sich der Sitzboden 12 in einer hinteren Position, wobei sich die zweite Lagerstelle 40 der zweiten Lagereinheit 18 in der Kulisse 20 weiter hinten befindet und der kurze Hebel 26 des Hebelgetriebes 16 nach hinten verschwenkt ist.

Wird von einem Passagier die Rückenlehneneinheit 34 von der TTL-Stellung in die Reisestellung bewegt, wird der Sitzboden 12 über die zweite Lagereinheit 18 in der Kulisse 20 nach hinten gefahren. Zeitgleich wird der kurze Hebel 26 des Hebelgetriebes 16 nach hinten verschwenkt, was ein Anheben des Sitzbodens 12 in seinem vorderen Bereich bewirkt. Zusätzlich ist die Kulisse 20 nach hinten abgesenkt und bildet somit eine Rampe, so dass der Sitzboden 12 durch die Bewegung nach hinten und das Verschwenken des kurzen Hebels 26 nach hinten zusätzlich in seinem vorderen Bereich nach oben geführt wird.

Der Sitzboden 12 führt damit eine kombinierte Bewegung aus, und zwar eine translatorische und eine rotatorische Bewegung. Ist eine gewünschte Position erreicht, werden die Rückenlehneneinheit 34 und der Sitzboden 12 in ihren Stellungen durch eine Fixiereinheit 50 fixiert.

### Bezugszeichen

| | | | |
|---|---|---|---|
| 10 | Sitzbodenlagereinrichtung | 46 | Führungselement |
| 12 | Sitzboden | 48 | Öffnung |
| 14 | erste Lagereinheit | 50 | Fixiereinheit |
| 16 | Hebelgetriebe | | |
| 18 | zweite Lagereinheit | | |
| 20 | Kulisse | | |
| 22 | vorderer Bereich der Sitzvorrichtung | | |
| 24 | hinterer Bereich der Sitzvorrichtung | | |
| 26 | kurzer Hebel | | |
| 28 | langer Hebel | | |
| 30 | Stellvorrichtung | | |
| 32 | Trägerelement | | |
| 34 | Rückenlehneneinheit | | |
| 36 | Rückenlehnenkinematikeinheit | | |
| 38 | erste Lagerstelle | | |
| 40 | zweite Lagerstelle | | |
| 42 | Sitzbodenvorderkante | | |
| 44 | Fußelement | | |

## Patentansprüche

1. Sitzvorrichtung, insbesondere Fahrzeug- oder Flugzeugsitzvorrichtung, mit einer Sitzbodenlagereinrichtung (10), die dazu vorgesehen ist, einen Sitzboden (12) beweglich zu lagern,
**dadurch gekennzeichnet,**
**dass** die Sitzbodenlagereinrichtung (10) wenigstens eine erste Lagereinheit (14) mit zumindest einem Hebelgetriebe (16) und wenigstens eine zweite Lagereinheit (18) mit zumindest einer Kulisse (20) aufweist.

2. Sitzvorrichtung nach Anspruch 1,
**dadurch gekennzeichnet,**
**dass** die erste Lagereinheit (14) in einem vorderen Bereich (22) der Sitzvorrichtung und die zweite Lagereinheit (18) in einem hinteren Bereich (24) der Sitzvorrichtung angeordnet ist.

3. Sitzvorrichtung nach Anspruch 1 oder 2,
**dadurch gekennzeichnet,**
**dass** das Hebelgetriebe (16) mindestens einen Hebel (26, 28) aufweist.

4. Sitzvorrichtung nach Anspruch 3,
**dadurch gekennzeichnet,**
**dass** der Hebel (26, 28) längenverstellbar ist.

5. Sitzvorrichtung nach einem der vorhergehenden Ansprüche,
**dadurch gekennzeichnet,**
**dass** das Hebelgetriebe (16) mindestens zwei gelenkig miteinander verbundene Hebel (26, 28) aufweist.

6. Sitzvorrichtung nach einem der vorhergehenden Ansprüche,
**dadurch gekennzeichnet,**
**dass** die Hebel (26, 28) entweder unterschiedliche Längen und/oder gleiche Längen aufweisen.

7. Sitzvorrichtung nach einem der vorhergehenden Ansprüche,
**dadurch gekennzeichnet,**
**dass** die Kulisse (20) einen geradlinigen und/oder einen kurvenförmigen Verlauf aufweist.

8. Sitzvorrichtung nach einem der vorhergehenden Ansprüche,
**dadurch gekennzeichnet,**
**dass** die Kulisse (20) einen U-förmigen Querschnitt aufweist.

9. Sitzvorrichtung nach einem der vorhergehenden Ansprüche,
**gekennzeichnet durch**
eine Stellvorrichtung (30), die zum Antrieb der Sitzbodenlagereinrichtung (10) dient.

10. Sitzvorrichtung nach Anspruch 9,
**dadurch gekennzeichnet,**
**dass** die Stellvorrichtung (30) am Hebelgetriebe (16) vorgesehen ist.

11. Sitzvorrichtung nach Anspruch 9 oder 10,
**dadurch gekennzeichnet,**
**dass** die Stellvorrichtung (30) mit mindestens einem Hebel (26, 28) in Wirkverbindung steht.

12. Sitzvorrichtung nach einem der Ansprüche 9 bis 11,
**dadurch gekennzeichnet,**
**dass** die Stellvorrichtung (30) zusätzlich zur Dämpfung der Stellbewegung der Sitzvorrichtung dient.

13. Sitz, insbesondere Fahrzeug- oder Flugzeugsitz mit einer Sitzvorrichtung nach einem der vorhergehenden Ansprüche.
